# FASCICULE DE BREVET EUROPEEN

(11) **EP 3 988 447 B1**
(45) Date de publication et mention de la délivrance du brevet: **03.09.2025**
(21) Numéro de dépôt: 21203255.1
(22) Date de dépôt: 18.10.2021
(51) Int. Cl.: B64C 25/04, B64C 25/12, B64C 1/10

(54) **MODULE DE TRAIN D'ATTERRISSAGE PRINCIPAL D'AÉRONEF COMPACT PERMETTANT UN MONTAGE MODULAIRE**
KOMPAKTES HAUPTFAHRWERKSMODUL FÜR LUFTFAHRZEUG, DAS EINE MODULARE MONTAGE ERMÖGLICHT
COMPACT AIRCRAFT MAIN LANDING GEAR MODULE ALLOWING MODULAR ASSEMBLY

(30) Priorité: 22.10.2020 FR 2010866
(43) Date de publication de la demande: 27.04.2022
(73) Titulaire: AIRBUS OPERATIONS (S.A.S.), 31060 Toulouse (FR)
(72) Inventeur: LEGARDEZ, Alexandre, 31060 TOULOUSE (FR); BELLET, Daniel, 31060 TOULOUSE (FR)
(74) Mandataire: Sarraméa, Claude

(56) Documents cités:
- EP-A1- 3 626 610
- FR-A1- 2 913 400
- FR-A1- 3 031 080
- US-A- 5 692 703

## Description

### DOMAINE TECHNIQUE

La présente invention concerne le domaine de l'assemblage de fuselage d'aéronef. En particulier, elle concerne un module de train d'atterrissage.

### ÉTAT DE LA TECHNIQUE

La fonction d'une case de train d'atterrissage consiste à ranger le ou les trains d'atterrissage d'un aéronef. De façon habituelle, une case de train d'atterrissage principal (« main landing gear bay » en anglais) comprend au moins trois parties : une paroi de toit, deux parois latérales et une paroi arrière. La paroi de toit et la paroi arrière forment une barrière de pressurisation. Dans le document FR 2 998 868, la paroi avant de la case est assurée par une paroi arrière d'un caisson central de voilure (« center wing box » en anglais) sur lequel les ailes de l'aéronef sont fixées. La paroi de toit rejoignant les deux parois latérales comportent des membranes (« diaphragms » en anglais) et des portiques (« gantries » en anglais) afin d'assurer son rôle de barrière de pressurisation et de tenir compte d'un éventuel décalage avec le caisson central de voilure. Les parois latérales comportent des panneaux plans ou membranes entre la peau de fuselage et le premier portique afin d'assurer une rigidité globale du fuselage lors de flexions latérales. La paroi arrière comporte des panneaux renforcés et des longerons verticaux en matière composite ou métallique.

Il est connu du document FR3031080 une case de train d'atterrissage pour le logement de deux trains d'atterrissages principaux, dont le toit forme une barrière de pressurisation entre un compartiment supérieur pressurisé et la case de train d'atterrissage. Le toit de la case de train d'atterrissage est monté fixement sur le caisson central de voilure. La case de train d'atterrissage est délimitée vers l'avant par la peau arrière du caisson central de voilure, et vers l'arrière par une paroi de fond étanche.

Il est connu du document FR2913400 un plancher d'aéronef formant un toit d'une la case de train d'atterrissage. Le plancher comporte des plaques formant une barrière de pression entre l'extérieur et la partie du fuselage située au-dessus du plancher.

Ce type de case de train d'atterrissage est dépendant du caisson central de voilure. Le train d'atterrissage, quant à lui, est généralement installé sur la voilure Il est donc nécessaire de monter la case avec le caisson central de voilure ainsi que la voilure elle-même pour pouvoir faire fonctionner ou tester le train d'atterrissage lors des dernières étapes de l'assemblage final de l'aéronef.

### EXPOSÉ DE L'INVENTION

La présente invention a pour objet de pallier cet inconvénient en proposant un module de train d'atterrissage compact permettant un montage modulaire.

À cet effet, l'invention concerne un module de train d'atterrissage principal d'aéronef comprenant au moins :
- deux trains d'atterrissage principaux, appelés trains d'atterrissage, configurés pour être déployés ou repliés alternativement ou simultanément,
- une case de train d'atterrissage contenant les trains d'atterrissage.

Selon l'invention, la case de train comporte au moins :
- deux parois latérales ;
- une paroi de toit,
- une paroi avant et
- une paroi arrière ;
la paroi de toit, la paroi avant et la paroi arrière étant configurées pour former ensemble une barrière de pressurisation entre la case et un compartiment pressurisé.

Ainsi, grâce à l'invention, il n'est plus nécessaire de monter la case de train d'atterrissage à un caisson de voilure afin de pouvoir faire fonctionner et tester le train d'atterrissage après l'assemblage final de l'aéronef. Les trains d'atterrissage ainsi que la ou les portes et le carénage peuvent ainsi être assemblés, testés avant l'installation sur l'aéronef. En particulier, la case présente une paroi avant qui permet d'avoir un module complet indépendant du caisson central de voilure. On obtient ainsi un module permettant un assemblage modulaire de la case.

En outre, le module comprend au moins une porte configurée pour fermer la case lorsque les trains d'atterrissage sont repliés ou déployés.

De plus, le module comprend un système de commande des trains d'atterrissage configuré pour déployer ou replier les trains d'atterrissage.

Par ailleurs, le module comprend un carénage ventral autour de la case.

Par ailleurs, les parois latérales, la paroi de toit, la paroi avant, la paroi arrière et la ou les portes de fermeture de la case forment un caisson fermé.

L'invention concerne aussi une partie centrale de fuselage d'aéronef.

Selon l'invention, la partie centrale comprend au moins dans l'ordre de l'avant vers l'arrière de l'aéronef :
- une section avant de la partie centrale de fuselage,
- un caisson central de voilure comprenant au moins une paroi avant, une paroi arrière et une paroi de toit formant ensemble une barrière de pressurisation,
- une section centrale de la partie centrale de fuselage comprenant une paroi intermédiaire formant une barrière de pressurisation, la paroi intermédiaire comprenant une extrémité avant et une extrémité arrière, l'extrémité avant étant reliée à un bord de la paroi arrière du caisson central de voilure,
- un module de train d'atterrissage tel que décrit ci-dessus, l'extrémité arrière de la paroi intermédiaire étant reliée à un bord de la paroi avant de la case de train,
- une section arrière de la partie centrale de fuselage.

La partie centrale comprend également une poutre ventrale sur laquelle sont fixés la section avant, le caisson central de voilure, la section centrale et le module de train d'atterrissage.

En outre, la partie centrale comprend un système de climatisation et de pressurisation de l'aéronef.

De plus, la partie centrale comprend un système hydraulique.

Par ailleurs, la partie centrale comprend un système de gestion de carburant.

L'invention concerne en outre un fuselage comprenant une partie centrale de fuselage telle que décrite ci-dessus.

L'invention concerne également un aéronef, notamment un avion de transport, comportant un fuselage tel que spécifié ci-dessus.

### BRÈVE DESCRIPTION DES FIGURES

L'invention, avec ses caractéristiques et avantages, ressortira plus clairement à la lecture de la description faite en référence aux dessins annexés dans lesquels :
La figure 1 représente une vue en perspective un module de train d'atterrissage.
La figure 2 représente une vue éclatée en perspective d'une partie centrale de fuselage comprenant le module de train d'atterrissage.
La figure 3 représente schématiquement une coupe longitudinale d'une partie centrale de fuselage.
La figure 4 représente une vue de profil d'un aéronef comprenant une partie centrale de fuselage pourvue d'un module de train d'atterrissage.

### DESCRIPTION DÉTAILLÉE

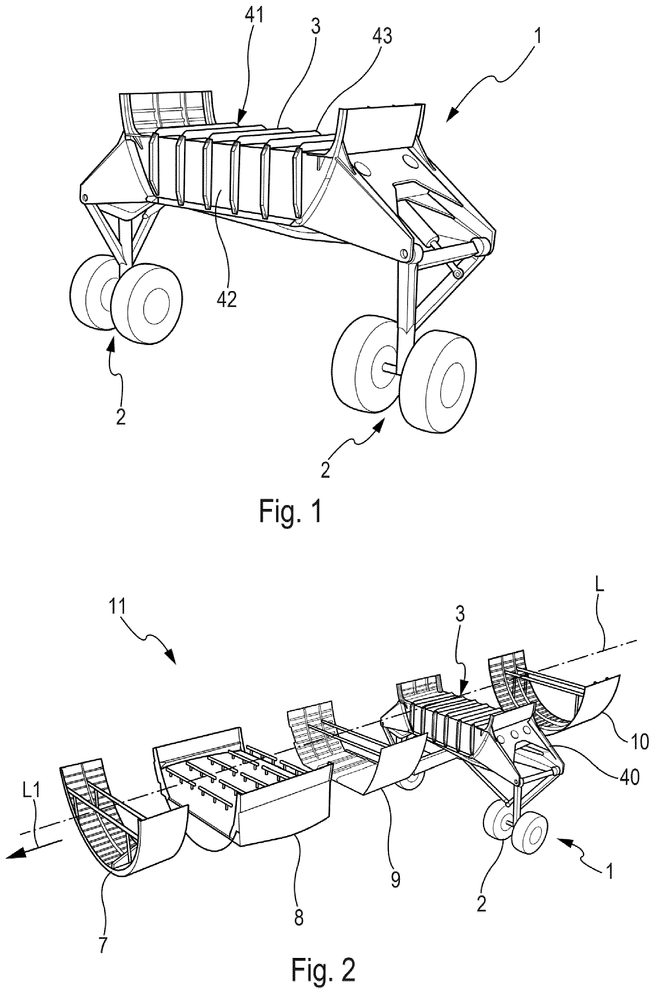

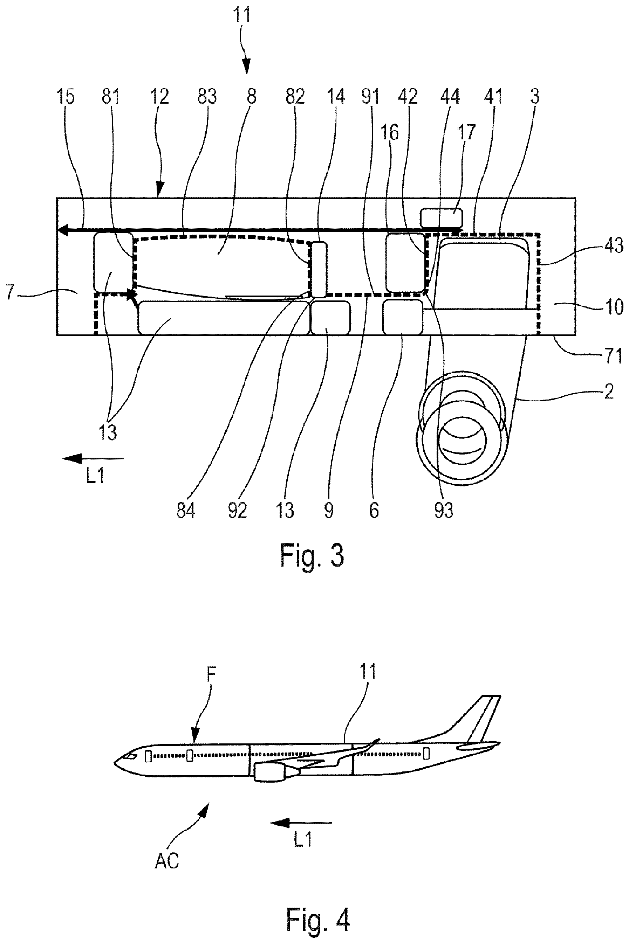

Le module de train d'atterrissage 1 est représenté sur la figure 1. Ce module de trains d'atterrissage 1 est susceptible d'être monté sur un aéronef AC (figure 4) de façon modulaire.

Pour faciliter la description, on a représenté, sur la figure 2, la figure 3 et la figure 4, une flèche L1 qui indique un sens définissant un sens dit « avant » (dirigé selon l'axe longitudinal L de l'aéronef AC), à savoir vers l'avant de l'aéronef AC dans le sens de vol (ou de déplacement) de l'aéronef AC. Le sens opposé à celui de la flèche L1 définit un sens dit « arrière ».

Le module de train d'atterrissage 1 principal d'aéronef AC comprend au moins deux trains d'atterrissage 2 principaux (appelés « trains d'atterrissage » dans la suite de la description), configurés pour être déployés ou repliés simultanément ou alternativement et une case 3 de train d'atterrissage contenant les trains d'atterrissage 2.

La case 3 comporte au moins deux parois latérales 40, une paroi de toit 41, une paroi avant 42 et une paroi arrière 43. La case 3 présente ainsi une forme générale de parallélépipède.

La paroi de toit 41, la paroi avant 42 et la paroi arrière 43 forment ensemble une barrière de pressurisation (représentée par une ligne en pointillée sur la figure 3) avec un compartiment pressurisé 12. Le compartiment pressurisé 12 correspond, par exemple, à la cabine de l'aéronef AC ou une soute pressurisée de l'aéronef AC.

La paroi de toit 41 s'étend entre la paroi avant 42 et la paroi arrière 43 selon l'axe longitudinal L et s'étend entre une paroi latérale 40 et l'autre paroi latérale 40 selon une direction perpendiculaire à l'axe longitudinal L.

La paroi avant 42 de la case s'étend entre la paroi de toit 41 et un bord 44.

Le module de train d'atterrissage comprend au moins une porte (non représentée) configurée pour, alternativement, fermer la case 3 lorsque les trains d'atterrissage 2 sont repliés ou déployés et ouvrir la case 3 lors du déploiement ou de la rétraction des trains d'atterrissage 2. Avec ladite porte de fermeture/ouverture de la case 3, la paroi de toit 41, la paroi avant 42, la paroi arrière 43 et les parois latérales 40 forment un ensemble fermé et indépendant. Dans la forme illustrée, l'ensemble est un caisson parallélépipédique clos. Il ne s'ouvre que par la dite porte pour le déploiement/rétractation des trains.

Du fait de former un caisson comprenant ses propres parois, il constitue un module indépendant qui peut être testé indépendamment du caisson central de voilure.

Le module de train d'atterrissage 1 peut également comprendre en outre un système de commande des trains d'atterrissage (non représenté) configuré pour déployer ou replier les trains d'atterrissage 2.

Par ailleurs, le module de train d'atterrissage 1 peut comprendre un carénage ventral 71 (« belly fairing » en anglais) autour de la case 3.

L'invention concerne également une partie centrale de fuselage 11 d'aéronef AC.

La partie centrale de fuselage 11 comprend au moins dans l'ordre de l'avant vers l'arrière de l'aéronef AC selon la direction L1 de l'axe longitudinal L (figure 2) :
- une section avant 7 de la partie centrale de fuselage 11,
- un caisson central de voilure 8 comprenant au moins une paroi avant 81, une paroi arrière 82 et une paroi de toit 83 formant ensemble une barrière de pressurisation,
- une section centrale 9 de la partie centrale de fuselage 11 comprenant une paroi intermédiaire 91 formant une barrière de pressurisation,
- un module de train d'atterrissage 1 et

- une section arrière 10 de la partie centrale de fuselage 11.

Il est clair à la lecture de cette figure que le module 1 est bien indépendant du caisson central de voilure.

La partie centrale de fuselage 11 comprend en outre une poutre ventrale (non représentée). Avantageusement, la section avant 7, le caisson central de voilure 8, la section centrale 9, le module de train d'atterrissage 1 et la section arrière 10 sont fixés sur la poutre ventrale. La poutre ventrale peut également permettre de fixer la partie centrale de fuselage 11 au reste de fuselage de l'aéronef AC.

La figure 3 représente une coupe longitudinale d'un exemple de la partie centrale de fuselage 1.

La paroi intermédiaire 91 comprend une extrémité avant 92 et une extrémité arrière 93. L'extrémité avant 92 est reliée à un bord 84 de la paroi arrière 82 du caisson central de voilure 8. De plus, l'extrémité arrière 93 de la paroi intermédiaire 91 est reliée au bord 44 de la paroi avant 42 de la case 3.

Avantageusement, l'extrémité avant 92 et le bord 84 sont reliés entre eux à l'aide d'une cornière. De même, l'extrémité arrière 93 de la paroi intermédiaire 91 et le bord 44 sont reliés entre eux à l'aide d'une cornière.

La coupe longitudinale montrée sur la figure 3 présente un plancher 15 de la cabine de l'aéronef AC et la barrière de pressurisation (représentée en ligne pointillée sur la figure 3) formée par les parois 41, 42 et 43 du module de train d'atterrissage 1, les parois 81, 82 et 83 du caisson central de voilure 8 et la paroi intermédiaire 91.

Comme représenté sur la figure 3, la partie centrale de fuselage telle que décrite ci-dessus permet d'intégrer plusieurs systèmes utiles embarqué sur l'aéronef AC.

Ainsi, la partie centrale de fuselage 1 peut comprendre un système de climatisation et de pressurisation 13 de l'aéronef AC. Ce système de climatisation et de pressurisation 13 est utile, par exemple, pour climatiser et pressurisé le compartiment pressurisé 12. Ce système 13 est localisé en zone non pressurisée.

La partie centrale de fuselage 1 peut aussi comprendre un système hydraulique 6. Ce système hydraulique 6 peut être utilisé pour le fonctionnement d'actionneurs à bord de l'aéronef AC, tels que des actionneurs mettant en œuvre le déploiement ou le repliement des trains d'atterrissage 2.

La partie centrale de fuselage peut aussi comprendre un système de gestion de carburant 14. Ce système 14 peut être disposé contre la paroi arrière 82 du caisson central de voilure 8 sur la paroi intermédiaire 91.

Elle peut aussi comprendre un réservoir d'eau 16 disposé, par exemple, contre la paroi avant 42 de la case 3 sur la paroi intermédiaire 91.

Par ailleurs, elle peut comprendre une unité principale de panneau avertisseur central 17 (MCU « Main Central warning panel Unit » en anglais) qui peut être disposés sur le plancher 15 au-dessus de la case 3.

## Revendications

1. Module de train d'atterrissage principal d'aéronef comprenant au moins :
- deux trains d'atterrissage (2) principaux, appelés trains d'atterrissage, configurés pour être déployés ou repliés alternativement ou simultanément,
- une case (3) de train d'atterrissage contenant les trains d'atterrissage (2) ;
**caractérisé en ce que** la case (3) de train comporte au moins :
- deux parois latérales (40),
- une paroi de toit (41),
- une paroi avant (42) et
- une paroi arrière (43) ;
la paroi de toit (41), la paroi avant (42) et la paroi arrière (43) étant configurées pour former ensemble une barrière de pressurisation entre la case (3) et un compartiment pressurisé (12),
**caractérisé en ce que** le module de train d'atterrissage comprend en outre au moins une porte configurée pour fermer la case (3) lorsque les trains d'atterrissage (2) sont repliés ou déployés,
les parois latérales (40), la paroi de toit (41), la paroi avant (42), la paroi arrière (43) et la ou les portes de fermeture de la case formant un caisson fermé, et
les parois latérales (40), la paroi de toit (41), la paroi avant (42) et la paroi arrière (43) sont formées de sorte que la case (3) de train est un module complet indépendant d'un caisson central de voilure de l'aéronef, de sorte que le module de train d'atterrissage soit monté sur l'aéronef de façon modulaire, indépendamment du caisson central de voilure.

2. Module selon la revendication 1, **caractérisé en ce qu'**il comprend en outre un système de commande des trains d'atterrissage configuré pour déployer ou replier les trains d'atterrissage (2).

3. Module selon l'une quelconque des revendications 1 ou 2, **caractérisé en ce qu'**il comprend un carénage ventral (71) autour de la case (3).

4. Partie centrale de fuselage d'aéronef, **caractérisée en ce qu'**elle comprend au moins dans l'ordre de l'avant vers l'arrière de l'aéronef (AC) :
- une section avant (7) de la partie centrale de fuselage (11),
- un caisson central de voilure (8) comprenant au moins une paroi avant (81), une paroi arrière (82) et une paroi de toit (83) formant ensemble une barrière de pressurisation,
- une section centrale (9) de la partie centrale de fuselage (11) comprenant une paroi intermédiaire (91) formant une barrière de pressurisation, la paroi intermédiaire (91) comprenant une extrémité avant (92) et une extrémité arrière (93), l'extrémité avant (92) étant reliée à un bord (84) de la paroi arrière (82) du caisson central de voilure (8),
- un module de train d'atterrissage (1) selon l'une quelconque des revendications 1 à 3, l'extrémité arrière (93) de la paroi intermédiaire (91) étant reliée à un bord (44) de la paroi avant (42) de la case (3) de train,
- une section arrière (10) de la partie centrale de fuselage (11);
et **en ce qu'**elle comprend également une poutre ventrale sur laquelle sont fixés la section avant (7), le caisson central de voilure (8), la section centrale (9) et le module de train d'atterrissage (1).

5. Partie centrale selon la revendication 4, **caractérisée en ce qu'**elle comprend un système de climatisation et de pressurisation (13) de l'aéronef (AC).

6. Partie centrale selon l'une des revendications 4 ou 5, **caractérisée en ce qu'**elle comprend un système hydraulique (6).

7. Partie centrale selon l'une quelconque des revendications 4 à 6, **caractérisée en ce qu'**elle comprend un système de gestion de carburant (14).

8. Fuselage d'aéronef, **caractérisé en ce qu'**il comprend une partie centrale de fuselage (11) selon l'une quelconque des revendications 4 à 7.

9. Aéronef, **caractérisé en ce qu'**il comporte un fuselage (F) selon la revendication 8.

## Patentansprüche

1. Hauptfahrwerksmodul für ein Luftfahrzeug, welches mindestens umfasst:
- zwei Hauptfahrwerke (2), Fahrwerke genannt, die dafür ausgelegt sind, abwechselnd oder gleichzeitig ausgefahren oder eingefahren zu werden,
- einen Fahrwerkschacht (3), der die Fahrwerke (2) enthält;
**dadurch gekennzeichnet, dass** der Fahrwerkschacht (3) mindestens aufweist:
- zwei Seitenwände (40),
- eine Dachwand (41),
- eine Vorderwand (42) und
- eine Rückwand (43);
wobei die Dachwand (41), die Vorderwand (42) und die Rückwand (43) dafür ausgelegt sind, zusammen eine Druckbarriere zwischen dem Schacht (3) und einem druckbeaufschlagten Raum (12) zu bilden, **dadurch gekennzeichnet, dass** das Fahrwerksmodul außerdem mindestens eine Tür umfasst, die dafür ausgelegt ist, den Schacht (3) zu schließen, wenn die Fahrwerke (2) eingefahren oder ausgefahren sind, wobei die Seitenwände (40), die Dachwand (41), die Vorderwand (42), die Rückwand (43) und die Tür(en) zum Schließen des Schachtes einen geschlossenen Kasten bilden und die Seitenwände (40), die Dachwand (41), die Vorderwand (42) und die Rückwand (43) so ausgebildet sind, dass der Fahrwerkschacht (3) ein vollständiges Modul ist, das von einem Flügelmittelkasten des Luftfahrzeugs unabhängig ist, so dass das Fahrwerksmodul auf modulare Weise an dem Luftfahrzeug angebracht ist, unabhängig von dem Flügelmittelkasten.

2. Modul nach Anspruch 1, **dadurch gekennzeichnet, dass** es außerdem ein Steuerungssystem für die Fahrwerke umfasst, das dafür ausgelegt ist, die Fahrwerke (2) auszufahren oder einzufahren.

3. Modul nach einem der Ansprüche 1 oder 2, **dadurch gekennzeichnet, dass** es eine Bauchverkleidung (71) um den Schacht (3) herum umfasst.

4. Rumpfmittelteil eines Luftfahrzeugs, **dadurch gekennzeichnet, dass** er vom vorderen zum hinteren Bereich des Luftfahrzeugs (AC) hin der Reihe nach mindestens umfasst:
- einen vorderen Abschnitt (7) des Rumpfmittelteils (11),
- einen Flügelmittelkasten (8), der mindestens eine Vorderwand (81), eine Rückwand (82) und eine Dachwand (83) umfasst, die zusammen eine Druckbarriere bilden,
- einen mittleren Abschnitt (9) des Rumpfmittelteils (11), der eine Zwischenwand (91) umfasst, die eine Druckbarriere bildet, wobei die Zwischenwand (91) ein vorderes Ende (92) und ein hinteres Ende (93) umfasst, wobei das vordere Ende (92) mit einem Rand (84) der Rückwand (82) des Flügelmittelkastens (8) verbunden ist,
- ein Fahrwerksmodul (1) nach einem der Ansprüche 1 bis 3, wobei das hintere Ende (93) der Zwischenwand (91) mit einem Rand (44) der Vorderwand (42) des Fahrwerkschachtes (3) verbunden ist,
- einen hinteren Abschnitt (10) des Rumpfmittelteils (11) ;
und dadurch, dass er außerdem einen Kielträger umfasst, an dem der vordere Abschnitt (7), der Flügelmittelkasten (8), der mittlere Abschnitt (9) und das Fahrwerksmodul (1) befestigt sind.

5. Mittelteil nach Anspruch 4, **dadurch gekennzeichnet, dass** er ein Klimatisierungs- und Druckbeaufschlagungssystem (13) für das Luftfahrzeug (AC) umfasst.

6. Mittelteil nach einem der Ansprüche 4 oder 5, **dadurch gekennzeichnet, dass** er ein Hydrauliksystem (6) umfasst.

7. Mittelteil nach einem der Ansprüche 4 bis 6, **dadurch gekennzeichnet, dass** er ein Kraftstoffmanagementsystem (14) umfasst.

8. Luftfahrzeugrumpf, **dadurch gekennzeichnet, dass** er einen Rumpfmittelteil (11) nach einem der Ansprüche 4 bis 7 umfasst.

9. Luftfahrzeug, **dadurch gekennzeichnet, dass** es einen Rumpf (F) nach Anspruch 8 umfasst.

## Claims

1. Aircraft main landing gear module comprising at least:
- two main landing gears (2), called landing gears, configured to be deployed or retracted alternately or simultaneously,
- a landing gear bay (3) containing the landing gears (2);
**characterized in that** the landing gear bay (3) has at least:
- two lateral walls (40),
- a roof wall (41),
- a front wall (42) and
- a rear wall (43);
the roof wall (41), the front wall (42) and the rear wall (43) being configured to form together a pressurization barrier between the bay (3) and a pressurized compartment (12), **characterized in that** the landing gear module also comprises at least one door configured to close the bay (3) when the landing gears (2) are retracted or deployed, the lateral walls (40), the roof wall (41), the front wall (42), the rear wall (43) and the one or more doors for closing the bay forming a closed box, and the lateral walls (40), the roof wall (41), the front wall (42) and the rear wall (43) are formed such that the landing gear bay (3) is a complete module that is independent of a centre wing box of the aircraft, such that the landing gear module is mounted on the aircraft in a modular manner, independently of the centre wing box.

2. Module according to Claim **1, characterized in that** it also comprises a system for controlling the landing gears that is configured to deploy or retract the landing gears (2).

3. Module according to either one of Claims 1 and 2, **characterized in that** it comprises a belly fairing (71) around the bay (3).

4. Central aircraft fuselage part, **characterized in that** it comprises at least, in order from the front towards the rear of the aircraft (AC):
- a front section (7) of the central fuselage part (11),
- a centre wing box (8) comprising at least a front wall (81), a rear wall (82) and a roof wall (83) that together form a pressurization barrier,
- a central section (9) of the central fuselage part (11) comprising an intermediate wall (91) forming a pressurization barrier, the intermediate wall (91) comprising a front end (92) and a rear end (93), the front end (92) being connected to an edge (84) of the rear wall (82) of the centre wing box (8),
- a landing gear module (1) according to any one of Claims 1 to 3, the rear end (93) of the intermediate wall (91) being connected to an edge (44) of the front wall (42) of the landing gear bay (3),
- a rear section (10) of the central fuselage part (11);
and **in that** it also comprises a keel beam to which are fastened the front section (7), the centre wing box (8), the central section (9) and the landing gear module (1).

5. Central part according to Claim 4, **characterized in that** it comprises an air conditioning and pressurization system (13) of the aircraft (AC).

6. Central part according to either of Claims 4 and 5, **characterized in that** it comprises a hydraulic system (6).

7. Central part according to any one of Claims 4 to 6, **characterized in that** it comprises a fuel management system (14).

8. Aircraft fuselage, **characterized in that** it comprises a central fuselage part (11) according to any one of Claims 4 to 7.

9. Aircraft, **characterized in that** it has a fuselage (F) according to Claim 8.
